# EUROPÄISCHE PATENTSCHRIFT

(11) **EP 0 895 367 B1**
(45) Veröffentlichungstag und Bekanntmachung des Hinweises auf die Patenterteilung: **21.11.2007**
(21) Anmeldenummer: 98111819.3
(22) Anmeldetag: 26.06.1998
(51) Int. Cl.: H04B 7/15, H04J 3/14

(54) **Einrichtung zum Anschluss an ein SDH-Richtfunkgerät**
Apparatus for connection to an SDH directional radio unit
Système de connection à un équipement de transmission par faisceau hertzien SDH

(30) Priorität: 31.07.1997 DE 19733084
(43) Veröffentlichungstag der Anmeldung: 03.02.1999
(73) Patentinhaber: Deutsche Telekom AG, 53113 Bonn (DE)
(72) Erfinder: Janssen, Fokko, 26632 Ihlow-Riepe (DE); Münck, Bernhard, 26802 Moormerland (DE); Lohmeyer, Everwien, 26835 Holtland (DE)
(74) Vertreter: Gleiss & Grosse

(56) Entgegenhaltungen:
- WO-A-97/15987
- ROUGIER A: "TRANSMISSION TESTING: MORE CAPABILITY WITHOUT ADDED COMPLEXITY" TELECOMMUNICATIONS, DEDHAM, MA, US, Bd. 29, Nr. 8, 1. August 1995 (1995-08-01), Seiten 25-26,28, XP000614831 ISSN: 0040-2494
- "G.772 General aspects of digital transmission systems. Protected monitoring points provided on digital transmission systems." ITU-T, [Online] März 1993 (1993-03), XP002211219 Gefunden im Internet: <URL:www.ihserc.com> [gefunden am 2002-08-26]
- "SDH/PDH-MESSZWILLINGE UNTER EINEM HUT" TELCOM REPORT, SIEMENS AG. MUNCHEN, DE, Bd. 18, Nr. 2, 1. März 1995 (1995-03-01), XP000510939 ISSN: 0344-4724
- MIKI T: "OPTICAL TRANSPORT NETWORKS" PROCEEDINGS OF THE IEEE, IEEE. NEW YORK, US, Bd. 81, Nr. 11, 1. November 1993 (1993-11-01), Seiten 1594-1609, XP000421168 ISSN: 0018-9219

## Beschreibung

Die Erfindung betrifft eine Adaptereinrichtung zum Anschluß an ein SDH-Richtfunk-Gerät.

SDH-Richtfunkanlagen (SDH = Synchrone digitale Hierarchie) des Typs DRS 155 bzw. DRS 2x155/4000, 6200, 6800 und 13000 der Firma Bosch Telekom sind seit 1991 in Betrieb und wurden seinerzeit in den neuen Bundesländern in Betrieb genommen. In den alten Bundesländern wurde das SDH-Richtfunknetz hauptsächlich zur Bereitstellung des digitalen TV-Netzes für ARD und ZDF 1996/1997 ausgebaut. An die Qualität und Verfügbarkeit der entsprechenden Übertragungskanäle werden dabei hohe Anforderungen gestellt. Um eine Qualitätsprüfung durchführen zu können, werden mit den eigentlichen Nutzdaten sogenannte Kriterien übertragen. Es handelt sich hierbei um Informationen, die beispielsweise einen Empfängerausfall (MLE), Linienfehler (LFI) oder Funkfeldfehler (FFI) anzeigen. Diese Informationen beziehungsweise Kriterien werden von Ersatzschaltgeräten ausgewertet, die an einem Anschlußfeld des Richtfunkgeräts angeschlossen sind. Erkennen sie beispielsweise einen Linienfehler, so werden sie dafür sorgen, daß auf eine parallele Leitung, über die die gleichen Daten fließen, umgeschaltet wird.

Diese mitübertragenen Kriterien lassen sich momentan jedoch nicht dazu nutzen, die Qualität der Leitung zu überwachen und Hinweise über Störungsort und gestörtes Gerät zu erhalten. Bei älteren sogenannten PDH-Richtfunkgeräten wurde zur Überwachen eine Digitale-Richtfunk-Überwachungseinrichtung an das Richtfunkgerät angeschlossen. Mit Hilfe dieser Überwachungseinrichtung (im folgenden kurz Drüwe genannt) konnte auch von einem beliebigen Ort aus über eine Fernleitung eine Abfrage über die Qualität der Leitung durchgeführt werden.

Diese Digitale-Richtfunk-Überwachungseinrichtung läßt sich bei den SDH-Richtfunktgeräten, beispielsweise des bereits erwähnten Typs DRS155 beziehungsweise DRS 2 x 155/4000, 6200, 6800 und 13000 der Firma Bosch-Telekom, nicht anschließen. Es fehlt eine Möglichkeit, die Überwachungseinrichtung an die die Kriterien übertragenden Leitungen anzuschließen, ohne die Übertragung selbst zu beeinflussen.

### Würdigung des Stands der Technik

Aus der Veröffentlichung "ROUGIER A: 'TRANSMISSION TESTING: MORE CAPABILITY WITHOUT ADDED COMPLEXITY' TELECOM-MUNICATIONS, DEDHAM, US, Bd. 29, Nr. 8, 1. August 1995 (1995-08-01), Seiten 25-26,28, XP000614831 ISSN: 0040-2494" ist es bekannt, dass Messungen in gemischten PDH/SDH-Netzwerken neue Anforderungen stellen. Es wird darauf hingewiesen, dass neue Testgeräte einen PDH-Analysator und einen SDH-Analysator aufweisen müssen. Es wird aber kein Hinweis darauf gegeben, wie ältere, ausschließlich PDH-fähige digitale Richtfunküberwachungseinrichtungen bei Messungen an einem SDH-Richtfunkgerät eingesetzt werden können.

Die technische Standardisierungsschrift "'G.772 General aspects of digital transmission systems. Protected monitoring points provided on digital transmission systems.' ITU-T, [Online] März 1993 (1993-03), XP002211219 Gefunden im Internet: <URL:www.ihserc.com> [gefunden am 2002-08-26]" führt aus, welche Spezifikationen/Charakteristiken geschützte Messpunkte (protected monitoring points) aufweisen sollten, um eine Vereinheitlichung der geschützten Messpunkte zu erzielen.

Das Dokument '"SDH/PDH-MESSZWILLINGE UNTER EINEM HUT' TELCOM REPORT, SIEMENS AG, MUNCHEN, DE, Bd. 18, Nr. 2, 1. März 1995 (1995-03-01), XP000510939 ISSN: 0344-4724" zeigt ein vollständiges Messgerät auf, welches über einen PDH-Analysator und einen SDH-Analysator verfügt. Eine Weiterverwendung von älteren, ausschließlich PDH-fähigen digitalen Richtfunküberwachungseinrichtungen an einem SDH-Richtfunkgerät wird dabei nicht thematisiert.

Die Aufgabe der vorliegenden Erfindung besteht darin, eine Adaptereinrichtung zu schaffen, die eine kostengünstige Möglichkeit eröffnet, vorhandene digitale Richtfunk-Überwachungseinrichtungen, die bisher für PDH-Richtfunktgeräte eingesetzt wurden, auch zur Überwachung von SDH-Richtfunkgeräten zu nutzen.

Diese Aufgabe wird durch eine Adaptereinrichtung gelöst, die die Merkmale des Anspruchs 1 aufweist. Dadurch, daß die Adaptereinrichtung eine Entkoppelungsvorrichtung aufweist, können die Kriterien aus dem Anschlußfeld des SDH-Richtfunks abgegriffen werden, ohne diese selbst zu verändern, das heißt beispielsweise die Spannung abzusenken. Diese Entkoppelungsvorrichtung weist einen Treiberbaustein auf, der ein dem Eingangssignal entsprechendes Ausgangssignal generiert, ohne daß das Eingangssignal beeinflußt würde. Dies läßt sich beispielsweise mit Feldeffekttransistoren erreichen. Mehreren Datenleitungen, die zwei Anschlußvorrichtungen der Adaptereinrichtung miteinander verbinden, ist je ein Treiberelement des Treiberbausteins zugeordnet, wobei der Treiberbaustein als CMOS-Schaltung ausgebildet ist. Darüber hinaus ist ein Widerstandsfeld vorgesehen, über das die Eingänge der Treiberelemente mit einer positiven Spannung beaufschlagt sind.

In einer weiteren vorteilhaften Ausgestaltung der Erfindung ist jedem Treiberelement ein Widerstand nachgeordnet.

In einer vorteilhaften Weiterbildung der Erfindung sind beide Anschlußvorrichtungen als mehrpolige Stecker- und/oder Buchsenleisten ausgebildet. Vorzugsweise werden 25-polige Leisten benutzt.

In einer vorteilhaften Weiterbildung der Erfindung sind sowohl die Entkoppelungsvorrichtung als auch die beiden Anschlußvorrichtungen in einem gemeinsamen Gehäuse angeordnet, so daß eine sehr kompakte Bauweise erreicht wird.

In einer vorteilhaften Weiterbildung der Erfindung ist jeder Anschlußvorrichtung ein Befestigungselement, insbesondere in Form einer Schraubverbindung, zugeordnet.

Die Erfindung wird nun anhand eines Ausführungsbeispiels mit Bezug auf die Zeichnung näher erläutert. Dabei zeigen:
- Figur 1: eine schematische Blockdarstellung eines digitalen Richtfunksystems,
- Figur 2: ein Schaltbild der Adaptereinrichtung, und
- Figur 3a und 3b: eine Seiten- und Frontansicht der Adaptereinrichtung.

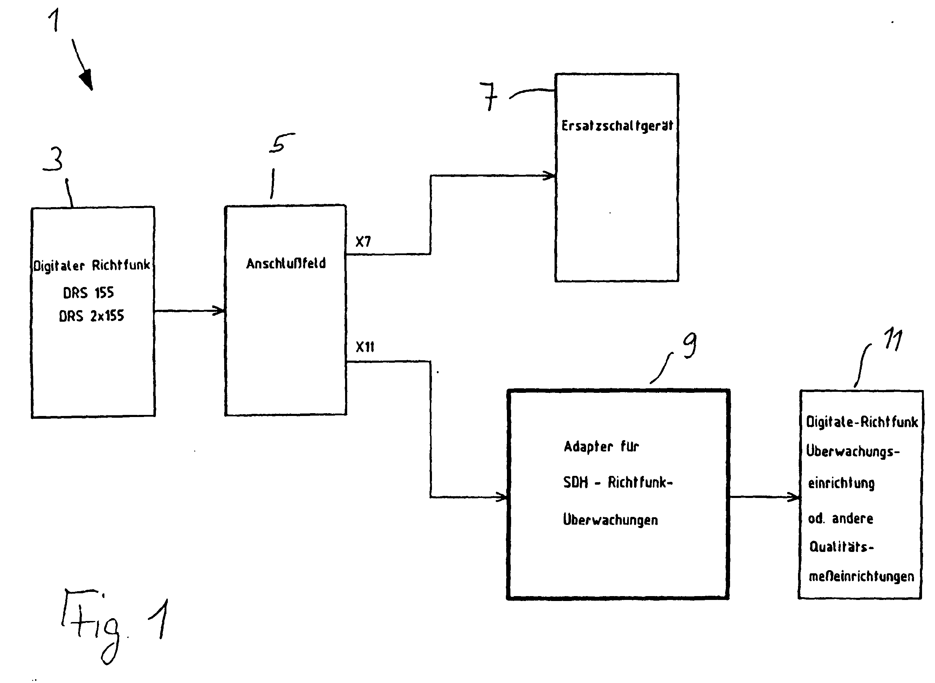

In Figur 1 ist in Form eines Blockschaltbildes ein Ausschnitt einer Richtfunkstation 1 dargestellt. Eine solche Richtfunkstation dient dazu, per Richtfunk oder per Kabel angelieferte Datenströme von 155 Mbit/s, die neben Fernseh- und Rundfunksignale auch Telefon- oder andere Datensignale enthalten, an eine weitere Richtfunkstation zu übertragen. Zur Erhöhung der Verfügbarkeit und der Übertragungsqualität werden diese als Nutzsignale bezeichenbare Signale üblicherweise über zwei Kanäle beziehungsweise Leitungen zeitgleich übertragen, so daß bei Ausfall einer Leitung unterbrechungslos auf die zweite Leitung umgeschaltet werden kann. Um Störungen zu erkennen, werden mit den Nutzsignalen Informationssignale, im folgenden als Kriterien bezeichnet, hinzuaddiert. Die Kriterien umfassen beispielsweise Funkfeldfehlerimpulse (FFI), Linienfehlerimpulse (LFI) und Empfängerausfallimpulse (MLE). Unter Funkfeld ist hierbei das sich zwischen dem Sender und dem Empfänger erstreckende Gebiet (Feld) zu verstehen.

Die Richtfunkanlage 1 umfaßt zumindest ein SDH(Synchrone digitale Hierachie)-Richtfunkgerät 3, bei dem es sich beispielsweise um den Typ DRS 155 beziehungsweise DRS 2 x 155 der Firma Bosch-Telekom handelt. Dem Richtfunkgerät 3 ist ein sogenanntes Anschlußfeld 5 zugeordnet, das Anschlußmöglichkeiten für diverse andere Geräte bietet. So stellt es beispielsweise eine Anschlußmöglichkeit für ein Ersatzschaltgerät 7 über eine Steckverbindung zur Verfügung. Das Ersatzschaltgerät 7 hat die Aufgabe, die zugeführten Kriterien auszuwerten und Fehler in der Funkverbindung festzustellen. Treten beispielsweise solche Fehler in der Verbindung auf, so leitet das quasi als Weiche dienende Ersatzschaltgerät 7 nicht die Nutzdaten der gestörten Leitung sondern die Nutzdaten der parallelen zweiten Leitung weiter.

An einem weiteren Anschluß des Anschlußfeldes 5 ist ein Adapter 9 angeschlossen, der eine Umsetzung der Kriterien durchführt, so daß sie von einer am Adapter 9 angeschlossenen digitalen Richtfunk-Überwachungseinrichtung 11 empfangen und ausgewertet werden können. Die digitale Richtfunk-Überwachungeinrichtung 11 ist so ausgelegt, daß Fehler sowohl vor Ort durch das Personal erkennbar sind, als auch beispielsweise per Modem und Datenleitung an einem fernen Ort abfragbar sind.

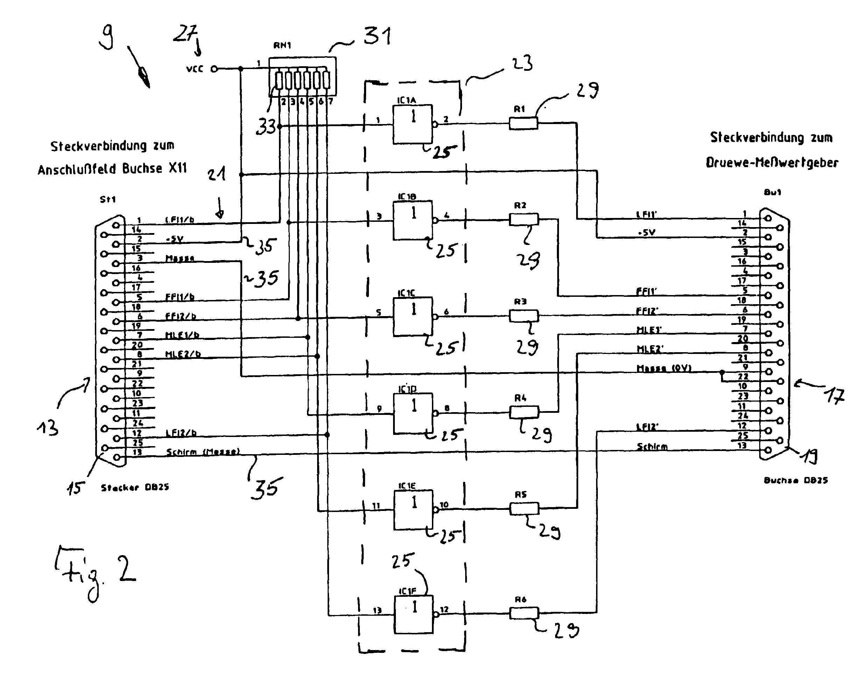

In Figur 2 ist ein Schaltbild des Adapters 9 dargestellt. Der Adapter 9 umfaßt eine als Stecker ausgebildete Anschlußleiste 13, die im vorliegenden Ausführungsbeispiel 25-polig in Form eines üblichen DB-25-Steckers 15 ausgebildet ist. Dieser Stecker 25 wird in eine dafür vorgesehene Buchse im Anschlußfeld 5 eingesteckt.

Der ersten Anschlußleiste 13 gegenüber liegt eine zweite Anschlußleiste 17, die ebenfalls 25-polig in Form einer üblichen DB-25-Buchse 19 ausgebildet ist.

Die vom Anschlußfeld 5 bereitgestellten Kriterien, im vorliegenden Ausführungsbeispiel handelt es sich hierbei um die Signale LFI1, LFI2, FFI1, FFI2, MLE1, MLE2 werden über Leitungen 21 von den Kontakten des Steckers 15 zu den entsprechenden Kontakten der Buchse 19 geführt.

Um eine elektrische Entkoppelung zwischen den beiden Anschlußleisten 13, 17 zu erreichen, ist eine Entkoppelungsvorrichtung 23 vorgesehen. Diese Entkoppelungsvorrichtung 23 umfaßt eine der Anzahl der zu übertragenden Kriterien entsprechende Anzahl an Entkopplungselementen 25, die jeweils in eine Leitung eingebracht sind. Bei den Entkopplungselementen 25 handelt es sich vorzugsweise um CMOS-Treiberbausteine. Mit Hilfe dieser Treiberbausteine 25 ist es möglich, die Kriterien leistungslos, das heißt ohne Beeinflussung der Spannung des Kriterieums elektrisch umzusetzen. Dies wird über eine Spannungsversorgung 27 ermöglicht, die die Treiberbausteine 25 mit einer Spannung VCC versorgt.

Jedem der Treiberbausteine 25 ist ein Widerstand 29 nachgeordnet, wobei den Widerständen 29 die Aufgabe zukommt, Kurzschlüsse bei einer fehlerhaften Beschaltung der Buchse 19 zu verhindern.

Der Adapter 9 weist darüber hinaus ein Widerstandsfeld 31 auf, das eine der Zahl der Kriterien entsprechende Anzahl an einzelnen Widerständen 33 umfaßt. Die im vorliegenden Fall sechs Widerstände 33 sind einerseits mit der Spannungsversorgung 27 verbunden und andererseits mit jeweils einer Kriterienleitung 21. Mit Hilfe dieser Beschaltung ist es möglich, auf den Kriterienleitungen 21 bei unterschiedlichen Einsatzfällen ein eindeutiges Potential zu schaffen.

Neben den bereits erwähnten Kriterienleitungen 21 sind im vorliegenden Ausführungsbeispiel weitere Leitungen 35 für die Versorgungsspannung, für Masse und für die Abschirmung vorgesehen. Diese Leitungen 35 sind jedoch nicht mit der Entkoppelungsvorrichtung 23 verbunden, sondern führen direkt zu den Entsprechenden Kontakten der Buchse 19.

Dieser Adapter 9 erlaubt also einen Abgriff der Kriterien am Anschlußfeld 5, ohne deren Signalpegel zu beeinflussen, da die Entkopplungsvorrichtung 23, insbesondere die Treiberbausteine 25 eine elektrische Umsetzung der Kriterien durchführen. Damit wird der Signalpegel unabhängig von der Beschaltung an der Buchse 19. Da die für das Ersatzschaltgerät 7 vorgesehene Anschlußmöglichkeit nicht galvanisch getrennt ist von der Anschlußmöglichkeit für den Adapter 9 beziehungsweise die digitale Richtfunk-Überwachungseinrichtung 11, läßt sich mit Hilfe des Adapters 9 eine Beeinflussung der Kriterien durch den Anschluß der digitalen Richtfunk-Überwachungseinrichtung 11 vermeiden. Ohne eine solche Entkoppelung würden durch den Anschluß der digitalen Richtfunk-Überwachungseinrichtung 11 die Pegel der Kriterien beeinflußt mit der Folge, daß das Ersatzschaltgerät 7 fehlerhaft arbeitet.

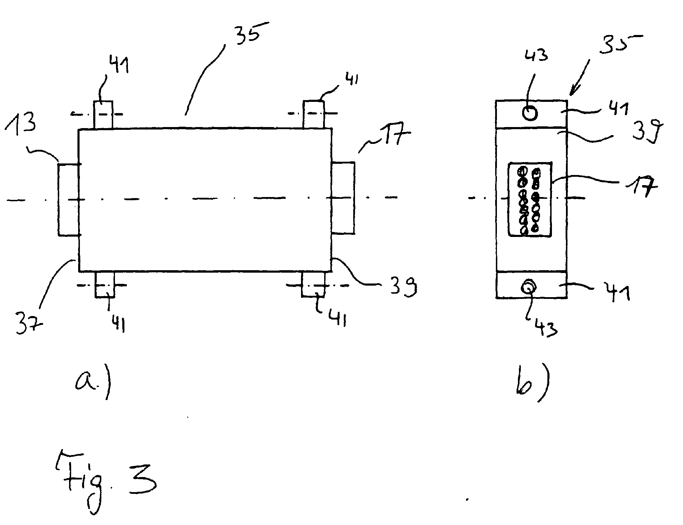

Die in Figur 2 beschriebenen Elemente des Adapters 9 sind, wie in Figur 3 dargestellt, in einem rechteckigen Gehäuse 35 untergebracht, wobei an den beiden Längsenden 37, 39 die Anschlußleisten 13 beziehungsweise 17 überstehen, so daß sie leicht an entsprechenden Anschlußleisten am Anschlußfeld 5 beziehungsweise an der digitalen Richtfunk-Überwachungseinrichtung 11 anschließbar sind.

Um eine sichere Kontaktierung zu ermöglichen, sind an dem Gehäuse 35 im Bereich der Längsseiten 37, 39 Platten 41 vorgesehen. Diese erstrecken sich senkrecht zu der Längsachse des Gehäuses 35 und weisen jeweils eine Bohrung 43 auf. Durch diese Bohrungen 43 werden Schrauben durchgeführt und mit der gegenüberliegenden Anschlußleiste des Anschlußfeldes 5 beziehungsweise der digitalen Richtfunk-Überwachungseinrichtung 11 verschraubt.

Es zeigt sich, daß ein in seiner Bauform sehr kompakter, kostengünstig herstellbarer Adapter vorliegt, der es ermöglicht, die vorhandenen digitalen Richtfunk-Überwachungseinrichtungen auch bei den neuen SDH-Richtfunkgeräten einzusetzen. Damit kann auf den Einsatz sehr teuerer Abzweigverstärker, die zur Aufbereitung der Signale für die digitale Richtfunk-Überwachungseinrichtung notwendig sind, verzichtet werden.

## Patentansprüche

1. Einrichtung zum Anschluss an ein SDH-Richtfunkgerät mit einer ersten, dem Anschluss an das SDH-Richtfunkgerät dienenden Anschlussvorrichtung (13), **dadurch gekennzeichnet, dass** die Einrichtung eine Adaptereinrichtung (9) ist, aufweisend eine zweite, dem Anschluss einer digitales, für PDH-Richffunkgeräte bestimmten Richtfunküberwachungseinrichtung dienende Anschlussvorrichtung (17), wobei die erste Anschlussvorrichtung (13) über eine eine rückwirkungsfreie elektrische Signalübertragung vornehmende Entkopplungsvornchtung (23) mit der zweiten Anschlussvorrichtung (17) mittels Daten-Leitungen (21) verbunden ist, wobei die Entkopplungsvorrichtung (23) einen Treiberbaustein umfasst und jeder Daten-Leitung (21) ein als CMOS-Treiberbaustein ausgebildetes Treiberelement (25) des Treiberbausteins zugeordnet ist, und dass ein Widerstandsfeld (31) vorgesehen ist, das eine der Zahl der Daten-Leitungen (21) entsprechende Anzahl von Widerständen (33) umfasst, die einerseits mit einer Spannungsversorgung und andererseits mit jeweils einer Daten-Leitung (21) verbunden sind, und über die die Eingänge der Treiberelemente (25) für eine eindeutige Potentialvorgabe mit einer positiven Spannung beaufschlagt sind.

2. Einrichtung nach Anspruch 1, **dadurch gekennzeichnet, dass** jedem Treiberelement (25) ein Widerstand (29) nachgeordnet ist.

3. Einrichtung nach einem oder mehreren der vorhergehenden Ansprüche, **dadurch gekennzeichnet, dass** die erste Anschlussvorrichtung (13) als mehrpolige, vorzugsweise 25-polige Steckerleiste (15) und die zweite Anschlussvorrichtung (17) als mehrpolige, vor zugsweise 25-polige Buchsenleiste (19) ausgebildet sind.

4. Einrichtung nach einem oder mehreren der vorhergehenden Ansprüche, **dadurch gekennzeichnet, dass** die Entkoppelungsvorrichtung (23) zusammen mit den beiden Anschlussvorrichtungen (13, 17) in einem Gehäuse (35) angeordnet sind.

5. Einrichtung nach einem oder mehreren der vorhergehenden Ansprüche, **dadurch gekennzeichnet, dass** jede Anschlussvorrichtung (13, 17) ein Befestigungselement (41) umfasst, das der wieder lösbaren Verbindung dient.

6. Einrichtung nach Anspruch 5, **dadurch gekennzeichnet, dass** das Befestigungselement (41) als Schraubverbindung ausgelegt ist.

## Claims

1. Apparatus for connection to an SDH directional radio unit having a first connection device (13) used for connecting to the SDH directional radio unit, **characterized in that** the apparatus is an adapter (9) having a second connection device (17) that is used for connecting to a digital directional radio monitoring device for PDH directional radio units, wherein the first connection device (13) is connected to the second connection device (17) by means of data lines (21) through a decoupling device (23) that performs electrical signal transmission without feedback, wherein the decoupling device (23) includes a driver component and each data line (21) has associated with it a driver element (25) - designed as a CMOS driver component - of said driver component, and **in that** a resistor field (31) is provided that includes a number of resistors (33) corresponding to the number of data lines (21), said resistors (33) being connected to a voltage supply and also each being connected to a separate data line (21), with a positive voltage being applied to the inputs of the driver elements' (25) through said resistors for an unambiguous voltage setting.

2. Apparatus according to claim 1, **characterized in that** each driver element (25) is followed by a resistor (29).

3. Apparatus according to one or more of the preceding claims, **characterized in that** the first connection device (13) is designed as a multi-pin, preferably 25-pin, male connector (15), and the second connection device (17) is designed as a multi-pin, preferably 25-pin, female connector (19).

4. Apparatus according to one or more of the preceding claims, **characterized in that** the decoupling device (23) is arranged in a housing (35) together with the two connection devices (13, 17).

5. Apparatus according to one or more of the preceding claims, **characterized in that** each connection device (13, 17) includes a fastening element (41) that is used to provide a releasable connection.

6. Apparatus according to claim 5, **characterized in that** the fastening element (41) is designed as a screw connection.

## Revendications

1. Système de connexion à un équipement de transmission par faisceau hertzien SDH, comportant un premier dispositif de connexion (13) servant à la connexion à l'équipement de transmission par faisceau hertzien SDH, **caractérisé en ce que** le système est un système adaptateur (9) présentant un second dispositif de connexion (17) servant à la connexion d'un système de surveillance de faisceau hertzien numérique destiné à des équipements de transmission par faisceau hertzien PDH, le premier dispositif de connexion (13) étant relié au second dispositif de connexion (17) par l'intermédiaire d'un dispositif de découplage (23) effectuant une transmission de signal électrique exempte de rétroaction et moyennant des lignes de données (21), le dispositif de découplage (23) comprenant un module de pilote et un élément de pilote (25) du module de pilote, réalisé sous la forme d'un module de pilote CMOS, étant affecté à chacune des lignes de données (21), et **en ce qu'**un champ de résistance (3 1) est prévu qui comprend un nombre de résistances (33) égal au nombre des lignes de données (21), reliées à une alimentation en tension d'une part et respectivement à une ligne de données (21) d'autre part, et par l'intermédiaire desquelles les entrées des éléments de pilote (25) sont alimentées en une tension positive pour une prédétermination univoque du potentiel.

2. Système selon la revendication 1, **caractérisé en ce qu'**une résistance (29) est prévue en aval de chaque élément de pilote (25).

3. Système selon l'une ou plusieurs des revendications précédentes, **caractérisé en ce que** le premier dispositif de connexion (13) est réalisé sous la forme d'un connecteur mâle (15) multibroche, de préférence à 25 pôles, et **en ce que** le second dispositif de connexion (17) est réalisé sous la forme d'une prise femelle (19) multibroche, de préférence à 25 pôles.

4. Système selon l'une ou plusieurs des revendications précédentes, **caractérisé en ce que** le dispositif de découplage (23) est logé, ensemble avec les deux dispositifs de connexion (13, 17) dans un boîtier (35).

5. Système selon l'une ou plusieurs des revendications précédentes, **caractérisé en ce que** chaque dispositif de connexion (13, 17) comprend un élément de fixation (41) servant à la liaison démontable.

6. Système selon la revendication 5, **caractérisé en ce que** l'élément de fixation (41) est conçu sous la forme d'un assemblage à vis.
